# EUROPÄISCHE PATENTSCHRIFT

(11) **EP 0 325 756 B1**
(45) Veröffentlichungstag und Bekanntmachung des Hinweises auf die Patenterteilung: **14.07.1993**
(21) Anmeldenummer: 88120956.3
(22) Anmeldetag: 15.12.1988
(51) Int. Cl.: B64C 1/40, B64D 25/00

(54) **Sicherheitseinrichtung für Flugzeuge**
Aircraft safety device
Dispositif de sécurité pour avion

(30) Priorität: 27.01.1988 DE 3802331
(43) Veröffentlichungstag der Anmeldung: 02.08.1989
(73) Patentinhaber: Deutsche Airbus GmbH, 21129 Hamburg (DE)
(72) Erfinder: Müller, Hans-Jürgen, D-2359 Hennstedt-Ulzburg (DE)

(56) Entgegenhaltungen:
- EP-A- 0 287 831
- DE-B- 1 053 319
- US-A- 4 121 790

## Beschreibung

Die Erfindung betrifft eine Sicherheitseinrichtung für Flugzeuge, insbesondere für Passagier- und Transportflugzeuge, in Form einer den Passagier- bzw. Frachtraum in einzelne Segmente unterteilenden feuerfesten bzw. feuerhemmenden Trennwand aus einem gasdichten und flammenresistenten faltbaren Material, deren äußere Begrenzung von einem Ringschlauch gebildet wird, dessen Form der Innenkontur des abzuschottenden Raumes angepaßt ist und der mit einer Druckerzeugungseinrichtung verbindbar ist, die mit der Trennwand zu einer im zusammengefalteten Zustand der Trennwand von einer Stauposition an unterschiedliche Einsatzorte im Rumpfinneren bewegbaren mobilen Einheit zusammengefaßt ist.

Es ist bereits bekannt, zur Vermeidung bzw. Verzögerung der Ausbreitung von Bränden und zur Erhöhung der Überlebenschancen der Flugzeuginsassen bei Ausbruch eines Feuers im Flugzeuginneren, den Passagierraum durch den Einbau feuerfester bzw. feuerhemmender Zwischenräume in einzelne Teilbereiche abzuschotten. Der Einbau derartiger Trennwände kann jedoch eine Reihe von Nachteilen mit sich bringen: Zum einen führt das Vorhandensein von Trennwänden zu einer sichtbaren Einbuße des sogenannten Großraum-Effektes, also des optischen Eindruckes einer weiträumigen, offenen Passagierkabine, zum anderen macht der nachträgliche Einbau von Trennwänden häufig umfangreiche Veränderungen an der vorhandenen Inneneinrichtung erforderlich.

Aus diesem Grund ist in der US-A-4 121 790 eine Einrichtung gemäß dem Oberbegriff des Anspruchs 1 vorgeschlagen worden, die auf einem Gestell montiert ist, das mittels Rollen in Schienen verfahrbar gehaltert ist, die an der Kabinendecke angebracht sind und die dadurch in verschiedene Abschnitte im Inneren der Passagierkabine eines Flugzeuges transportiert werden kann und bei der bei Ausbruch eines Feuers eine zusammengefaltete Trennwand mittels eines Druckfluids entfaltet wird. Ein Nachteil dieser bekannten Einrichtung liegt dabei in ihrem vergleichsweise hohen Gewicht sowie in dem von ihr beanspruchten Raum und Einbauaufwand, wodurch insbesondere ein nachträglicher Einbau in bereits im Einsatz befindliche Flugzeuge nachhaltig erschwert wird.

Neben dieser Einrichtung ist aus der DE-B-10 53 319 eine ähnliche Anordnung für Frachtflugzeuge bekannt, die aus einer den Frachtraum abschließenden gasdichten faltbaren Trennwand besteht, die ebenfalls über einen durch ein Druckfluid beaufschlagten Ringschlauch entfaltbar ist und die dann die Funktion eines Druckschotts übernimmt. Die Trennwand ist im Fall dieser bekannten Anordnung im Bereich einer oder mehrerer Ladeluken im Flugzeug installiert.

Aufgabe der Erfindung ist es, eine Sicherheitseinrichtung der eingangs genannten Art so auszubilden, daß sie mit einem Minimum an Gewicht und Raumbedarf auskommt.

Diese Aufgabe wird durch eine Einrichtung mit den kennzeichnenden Merkmalen des Anspruchs 1 gelöst. Vorteilhafte Weiterbildungen mit den Zweck, bei einem möglichst einfachen Aufbau ein Maximum an Schutzwirkung und Flexibilität zu erreichen, sind in den Unter ansprüchen angegeben.

Die erfindungsgemäß vorgesehene Integration der Druckerzeugungseinrichtung in den Ringschlauch ermöglicht es aufgrund ihres außerordentlich kompakten Aufbaus, diese Einrichtung in zusammengefaltetem Zustand der Trennwand an beliebiger Stelle im Inneren des Flugzeuges zu verstauen und sie erst bei Ausbruch eines Feuers an den dann erforderlichen Einsatzort zu verbringen und aufzustellen. Die Tatsache, daß die erfindungsgemäße Sicherheitseinrichtung dabei über eine eigene Energiequelle verfügt, erhöht nicht nur die Flexibilität dieser Einrichtung, sondern vergrößert zugleich ihre Zuverlässigkeit, indem sie ihre eiwandfreie Funktion unabhängig vom Funktionieren bordeigener Systeme in einem derartigen Notfall sicherstellt.

Insbesondere ist die Sicherheitseinrichtung nach der Erfindung für die Nachrüstung bereits im Einsatz befindlicher Flugzeuge geeignet, da sie nur ein Minimum an Stauraum sowie an zusätzlichen Installationen erfordert.

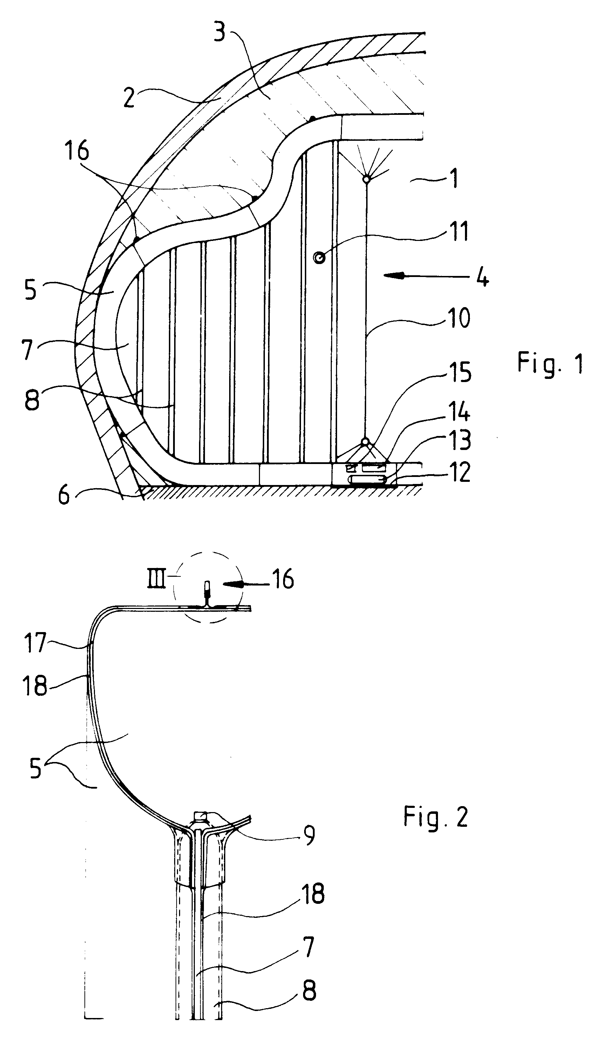

Im folgenden soll die Erfindung anhand zweier in der Zeichnung dargestellter Ausführungsbeispiele näher erläutert werden. Es zeigen:
- Fig. 1: einen Querschnitt durch einen Teil der Zelle eines Passagier- bzw. Frachtflugzeuges mit einer feuerhemmenden aufblasbaren Trennwand,
- Fig. 2: einen Schnitt durch eine Trennwand im Bereich des oberen Randabschlusses,
- Fig. 3:
- und 4: einen vergrößerten Ausschnitt aus der in Fig. 2 gezeigten Anordnung in zwei gegeneinander um 90° gedrehten Darstellungen und
- Fig. 5: eine zweite Trennwand in perspektivischer Darstellung.

In den Figuren sind gleiche Bauteile mit den gleichen Bezugszeichen versehen.

Der in Fig. 1 dargestellte Querschnitt durch den Rumpf eines Passagier- bzw. Frachtflugzeuges umfaßt einen Teil der Fluggastkabine 1 sowie den Bodenbereich zwischen der Kabine 1 und einem darunter befindlichen, hier nicht dargestellten Frachtladeraum. Für den Schnitt wurde eine Position in bezug auf die Längsrichtung des Flugzeuges gewählt, in der sich zwischen der Außenwand 2 des Flugzeuges und der Kabine 1 eine Abschottung 3 befindet, da eine derartige Stelle einen besonders geeigneten Bereich für die Plazierung einer die Kabine bei Ausbrechen eines Brandes in einzelne Segmente abschottende, entfalt- bzw. aufblasbare Trennwand 4 darstellt.

Die Trennwand 4 besteht aus einem Ringschlauch 5, der, wie in der Zeichnung angedeutet, in mehrere Segmente unterteilt ist und dessen Form im aufgeblasenen Zustand der Innenkontur der Kabine 1 angepaßt ist. An dieser Kontur sowie am Kabinenboden 6 liegt der Ringschlauch 5 nach dem Aufblasen gasdicht an. Der Ringschlauch 5 spannt dabei eine die eigentliche feuerhemmende Abschottung bildende faltbare Wand 7 auf. Letztere besteht im Fall des hier beschriebenen Ausführungsbeispiels aus einem Kunststoffgewebe, das ähnlich demjenigen ist, wie es auch für die in Flugzeugen bereitgehaltenen Notrutschen eingesetzt wird, wobei das Material in diesem Fall zusätzlich auf beiden Seiten mit einem Hitzeschutzgewebe versehen ist, das zu 98 % aus Siliziumdioxid besteht.

Zur Versteifung der Wand 7 sind ebenfalls schlauchartig aufgebaute, in diesem Fall ausschließlich vertikal verlaufende Streben 8 vorgesehen. Ihr Durchmesser ist kleiner als derjenige des Ringschlauches 5, mit dem sie über Ventile 9 verbunden sind. Weiterhin ist die Wand 7 durch einen gasdichten Reißverschluß 10 teilbar ausgebildet, der etwa im Bereich der Kabinenmitte angeordnet ist und der so bemessen ist, daß er einen Durchschlupf für Personen gestattet, auch für solche, die mit Brandbekämpfungsmitteln ausgerüstet sind. Außerdem ist in Kopfhöhe wenigstens ein Beobachtungsfenster 11, das ebenfalls aus einem feuerfesten Material besteht, in die Wand 7 eingearbeitet.

Im Innern des Ringschlauches 5 sind auf einer Grundplatte 12 eine Druckflasche 13, die in diesem Fall ein aus Kohlendioxid und Stickstoff bestehendes Gasgemisch enthält, ein Kompressor 14 sowie eine zur Versorgung des Kompressors 14 dienende Batterie 15 angeordnet, die zusammen eine Druckerzeugungseinrichtung bilden.

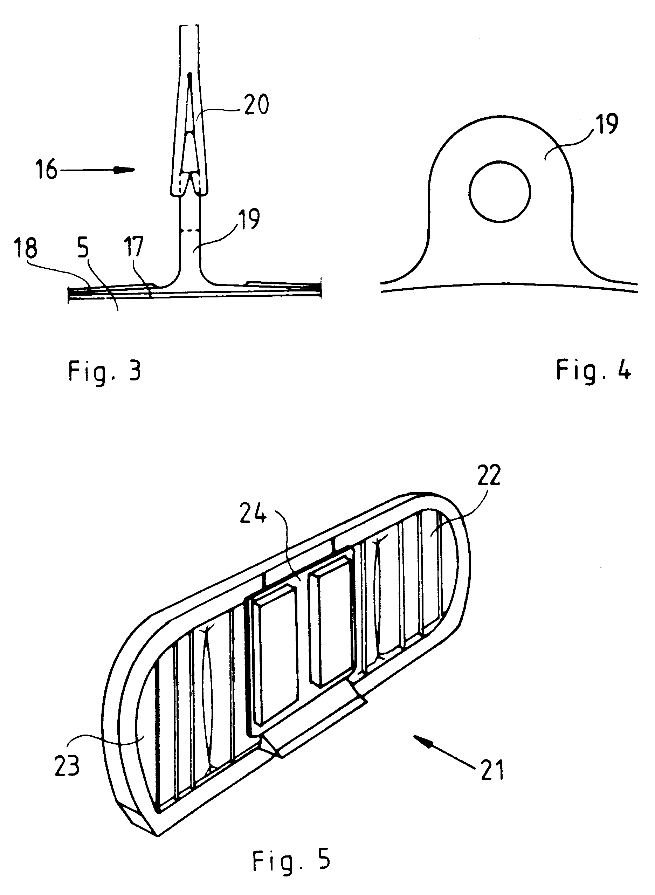

Schließlich sind in der Darstellung gemäß Fig. 1 noch Befestigungspunkte 16 für den Ringschlauch 5 angedeutet, die der Fixierung der aufgespannten Trennwand 4 dienen und auf die in Zusammenhang mit den Fig. 3 und 4 noch näher eingegangen wird.

Zunächst ist in Fig. 2 ein vertikaler, in Flugzeuglängsrichtung verlaufender Schnitt durch einen Teil der vorstehend beschriebenen Anordnung, nämlich den Ringschlauch 5 und die Wand 7, dargestellt. Die Figur zeigt dabei deutlich die verbreiterte Außenfläche des Ringschlauches 5, mit der dieser an der Innenwand der Kabine 1 anliegt. Ferner geht aus dieser Figur der Wandaufbau des Ringschlauches 5 hervor, der sich im Fall des hier dargestellten Ausführungsbeispiels aus einer Innenschicht 17 aus Gummi sowie einer Außenschicht 18 aus dem bereits erwähnten Hitzeschutzgewebe zusammensetzt, das auch die Wand 7 auf beiden Außenflächen bedeckt. Schließlich zeigt diese Figur die Position der die Streben 8 mit dem Ringschlauch 5 verbindenden Ventile 9.

Wie aus der in den Fig. 3 und 4 gezeigten vergrößerten Darstellung eines der Befestigungspunkte 16 hervorgeht, sind in die Außenhaut des Ringschlauches 5 an diskreten Punkten Befestigungsösen 19 integriert. Diese wirken zusammen mit Klemmhalterungen 20, die an den entsprechenden Positionen in die Innenverkleidung der Kabine 1 eingelassen sind und die der nur durch ein Werkzeug zu lösenden Fixierung der Befestigungsösen 19 und damit der gesamten Trennwand 4 dienen.

In Fig. 5 ist abschließend ein zweites Ausführungsbeispiel einer aufblasbaren Trennwand 21 dargestellt, die insbesondere für den Einsatz in modernen Großraumflugzeugen vorgesehen ist, bei denen zwei Kabinengänge vorhanden sind. In diesem Fall ist die Trennwand 21 in zwei Hälften 22 und 23 geteilt, die für sich genommen im Prinzip analog der vorstehend beschriebenen Anordnung aufgebaut sind und an eine in der Fluggastkabine bereits vorhandene Komponente 24 anschließbar sind.

Die in einer Fluggastkabine immer vorhandenen Klassentrennwände, Stauschränke, Galleyrückwände und dergleichen stellen derartige Komponenten 24 dar, die sehr gut zur Aufnahme der gefalteten Sicherheitseinrichtung und der Grundplatte 12 mit der Druckversorgungseinrichtung 13 bis 15 geeignet sind. Die Hälften 22 und 23 werden im Bedarfsfall durch gasdichte Reißverschlüsse, Klettverschlüsse oder dergleichen verbunden. Hierzu können an den betreffenden Verschlüssen Dichtlippen angeordnet sein, die in bekannter Weise einen Spalt infolge der wirksamen Druckdifferenz druckdicht verschließen.

Auch im Fall dieses Ausführungsbeispiels ist durch jeweils im Bereich der Kabinengänge vorgesehen Durchschlupföffnungen ein Zugang zu dem durch die aufgeblasene Trennwand 21 abgeschotteten Bereich sichergestellt. Die Verbindung der Trennwand mit der Kabinenstruktur erfolgt auf die gleiche Weise wie sie bereits anhand des ersten Ausführungsbeispiels beschrieben wurde.

Bei Ausbruch eines Brandes während des Fluges wird die zunächst zusammengefaltet auf der Grundplatte 12 liegende Trennwand 4 bzw. 21, sofern sie sich nicht bereits an der Position befindet, an der eine Abschottung vorgenommen werden soll, durch Aufstellen der Grundplatte 12 am vorgesehenen Einsatzort positioniert. Die Grundplatte ist zu diesem Zweck mit Rollen oder Kufen sowie mit Handgriffen versehen. Anschließend werden der Ringschlauch 5 sowie die Streben 8 über den Kompressor 14, der zu diesem Zweck von der Batterie 15 versorgt wird, aufgeblasen und die Wand 7 auf diese Weise entfaltet. Die Batterie 15 ist am Ruhestandort der Trennwand 4 bzw. 21 an das Bordnetz des Flugzeuges angeschlossen und somit ständig einsatzbereit.

Sobald der Ringschlauch 5 gefüllt ist und an der Innenwand der Kabine anliegt, rasten die Befestigungsösen 19 selbsttätig in die dafür vorgesehenen Klemmhalterungen ein, wodurch ein Abheben der Trennwand von der Innenkontur zuverlässig ausgeschlossen wird. Durch den gasdicht verschließbaren Durchschlupf kann, soweit noch nicht erfolgt, der gefährdete Bereich evakuiert werden, und es können mit Brandbekämpfungsmitteln ausgerüstete Personen in diesen Bereich gelangen.

Abschließend sei angemerkt, daß der Einsatz der vorstehend beschriebenen Sicherheitseinrichtung nicht auf Passagierflugzeuge beschränkt ist, sondern daß diese in gleicher Weise auch in Frachtflugzeugen einsetzbar ist.

## Patentansprüche

1. Sicherheitseinrichtung für Flugzeuge, insbesondere für Passagier- und Transportflugzeuge, in Form einer den Passagier- bzw. Frachtraum in einzelne Segmente unterteilenden feuerfesten bzw. feuerhemmenden Trennwand (4) aus einem gasdichten und flammenresistenten faltbaren Material, deren äußere Begrenzung von einem Ringschlauch (5) gebildet wird, dessen Form der Innenkontur des abzuschottenden Raumes (1) angepaßt ist und der mit einer Druckerzeugungseinrichtung (13-15) verbindbar ist, die mit der Trennwand zu einer im zusammengefalteten Zustand der Trennwand von einer Stauposition an unterschiedliche Einsatzorte im Rumpfinneren bewegbaren mobilen Einheit zusammengefaßt ist, dadurch gekennzeichnet, daß die Druckerzeugungseinrichtung (13-15) als mit einer elektrischen Energiequelle (15) versehene selbständige Baugruppe ausgebildet und in den Ringschlauch (5) integriert ist.

2. Sicherheitseinrichtung nach Anspruch 1, dadurch gekennzeichnet, daß die Druckerzeugungseinrichtung (13-15) einen Kompressor (14), eine ein Füllgas enthaltende Druckflasche (13) sowie eine Batterie (15) umfaßt.

3. Sicherheitseinrichtung nach Anspruch 1 oder 2, dadurch gekennzeichnet, daß die Trennwand (4,21) sowie die Druckerzeugungseinrichtung (13-15) auf einer gemeinsamen Grundplatte (12) angeordnet sind.

4. Sicherheitseinrichtung nach einem der Ansprüche 1 bis 3, dadurch gekennzeichnet, daß die Trennwand (4,21) mit schlauchartigen Versteifungen (8) versehen ist.

5. Sicherheitseinrichtung nach Anspruch 4, dadurch gekennzeichnet, daß die Versteifungen (8) über Ventile (9) mit dem Ringschlauch (5) in Verbindung stehen.

6. Sicherheitseinrichtung nach einem der Ansprüche 1 bis 5, dadurch gekennzeichnet, daß der Ringschlauch (5) aus einzelnen Kammern aufgebaut ist.

7. Sicherheitseinrichtung nach einem der Ansprüche 1 bis 6, dadurch gekennzeichnet, daß der Ringschlauch (5) auf seiner Außenfläche mit Befestigungsösen (19) versehen ist, die mit an der Innenwand des abzuschottenden Raumes (1) angeordneten Klemmhalterungen (20) in Eingriff bringbar sind.

8. Sicherheitseinrichtung nach einem der Ansprüche 1 bis 7, dadurch gekennzeichnet, daß die Trennwand (4,21) verschließbare Öffnungen aufweist.

9. Sicherheitseinrichtung nach einem der Ansprüche 1 bis 8, dadurch gekennzeichnet, daß die Trennwand (4,21) mit einem flammenresistenten Gewebe aus Siliziumdioxid überzogen ist.

## Claims

1. A safety device for aeroplanes, particularly for passenger and transport aeroplanes, in the form of a fireproof and/or fire-retarding partition (4) which is made from a gas-tight and flame-resistant foldable material and subdivides the passenger space or the cargo space into individual segments and whose outer boundary is formed by an annular flexible tube (5) whose shape is adapted to the internal contour of the space (1) to be partitioned off and which is connectible to a pressure generator (13 - 15) which is combined with the partition to form a mobile unit movable from a stowed position to different places of use in the fuselage when the partition is in its folded state, characterised in that the pressure generator (13 - 15) is in the form of an independent assembly provided with a source of electrical energy (15) and is integrated in the annular flexible tube (5).

2. A safety device as claimed in claim 1, characterised in that the pressure generator (13 - 15) comprises a compressor (14), a pressure cylinder (13) containing an inflation gas, and a battery (15).

3. A safety device as claimed in claim 1 or 2, characterised in that the partition (4, 21) and the pressure generator (13 -15) are disposed on a common base plate (12).

4. A safety device as claimed in any one of claims 1 to 3, characterised in that the partition (4, 21) is provided with flexible-tube-like stiffenings (8).

5. A safety device as claimed in claim 4, characterised in that the stiffenings (8) are connected to the annular flexible tube (5) by way of valves (9).

6. A safety device as claimed in any one of claims 1 to 5, characterised in that the annular flexible tube (5) is constructed from individual compartments.

7. A safety device as claimed in any one of claims 1 to 6, characterised in that the outer surface of the annular flexible tube (5) is provided with fastening eyelets (19) which may be brought into engagement with clamping holders (20) disposed on the inside wall of the space (1) to be partitioned off.

8. A safety device as claimed in any one of claims 1 to 7, characterised in that the partition (4, 21) has sealable openings.

9. A safety device as claimed in any one of claims 1 to 8, characterised in that the partition (4, 21) is covered with a flame-resistant textile fabric of silicon dioxide.

## Revendications

1. Dispositif de sécurité pour avions, en particulier pour avions pour passagers et pour avions de transport, sous forme d'une cloison de séparation (4) résistant au feu ou coupe-feu pendant un certain temps séparant le compartiment des passagers ou le compartiment du fret en différents segments réalisée en un matériau étanche aux gaz et résistant aux flammes, pliable, dont la délimitation extérieure est formée par un tuyau annulaire (5) dont la forme s'adapte au contour intérieur de l'espace (1) à cloisonner et qui peut être reliée à un dispositif (13, 15) générateur de pression, qui est réuni avec la cloison de séparation en une unité mobile pouvant être déplacée à l'intérieur de la cellule quand la cloison de séparation est dans son état replié, à partir d'une position de stockage et amenée à différents emplacements de montage, dispositif de sécurité caractérisé en ce que le dispositif générateur de pression (13, 15) est formé comme un groupe autonome pourvu d'une source d'énergie électrique (15) et est intégré dans le tuyau annulaire (5).

2. Dispositif de sécurité selon la revendication 1, caractérisé en ce que le dispositif générateur de pression (13, 15) comprend un compresseur (14), une bouteille de gaz comprimé (13) contenant un gaz de remplissage ainsi qu'une batterie (15).

3. Dispositif de sécurité selon la revendication 1 ou 2, caractérisé en ce que la cloison de séparation (4, 21) ainsi que le dispositif générateur de pression (13, 15) sont disposés sur une plaque commune de base (12).

4. Dispositif de sécurité selon l'une des revendications 1 à 3, caractérisé en ce que la cloison de séparation (4, 21) est pourvue de raidissements (8) en forme de tuyaux.

5. Dispositif de sécurité selon la revendication 4, caractérisé en ce que les raidissements (8) sont en liaison par des vannes (9) avec le tuyau annulaire (5).

6. Dispositif de sécurité selon l'une des revendications 1 à 5, caractérisé en ce que le tuyau annulaire (5) est construit à partir de chambres individuelles.

7. Dispositif de sécurité selon l'une des revendications 1 à 6, caractérisé en ce que le tuyau annulaire (5) est pourvu sur sa surface extérieure d'oeillets de fixation (19) qui peuvent être mis en prise avec des agrafes (20) disposées sur la paroi intérieure de l'espace à cloisonner (1).

8. Dispositif de sécurité selon l'une des revendications 1 à 7, caractérisé en ce que la cloison de séparation (4, 21) présente des ouvertures obturables.

9. Dispositif de sécurité selon l'une des revendications 1 à 8, caractérisé en ce que la cloison de séparation (4, 21) est recouverte par un tissu résistant aux flammes en silice.
